# EUROPEAN PATENT APPLICATION

(11) **EP 4 606 835 A1**
(43) Date of publication of application: **27.08.2025**
(21) Application number: 23879615.5
(22) Date of filing: 04.10.2023
(51) Int. Cl.: C08G 59/18, C08K 3/013, C08L 63/00

(54) **EPOXY RESIN COMPOSITION**

(30) Priority: 18.10.2022 JP 2022166877
(71) Applicant: SHIN-ETSU CHEMICAL CO., LTD., Tokyo 1000005 (JP); The School Corporation Kansai University, Suita-shi, Osaka 564-8680 (JP)
(72) Inventor: NODA, Daisuke, Annaka-shi, Gunma 379-0224 (JP); NAKAGAWA, Hideo, Tokyo 100-0005 (JP); IRIFUNE, Shinji, Annaka-shi, Gunma 379-0224 (JP); HARADA, Miyuki, Suita-shi, Osaka 564-8680 (JP)
(74) Representative: Schicker, Silvia
(86) International application number: PCT/JP2023/036177
(87) International publication number: WO 2024/084968

(57) **Abstract**

The present invention is an epoxy resin composition including (A) an epoxy resin containing 2 or more epoxy groups in one molecule, (B) a mesogenic group-containing polyorganosiloxane represented by the following formula (1), and (C) an epoxy resin curing agent. By this composition, an epoxy resin composition including a mesogenic group-containing polyorganosiloxane is provided; 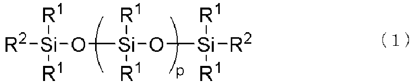 wherein R¹ each independently represents a group selected from an alkyl group having 1 to 12 carbon atoms, an aryl group having 6 to 12 carbon atoms, and an aralkyl group having 7 to 12 carbon atoms, or a hydroxy group; "p" is an integer of 0 to 100; and R² each independently represents the following formula (2) or formula (3); 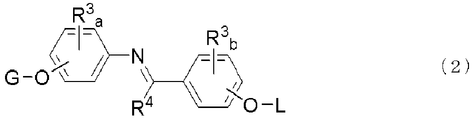 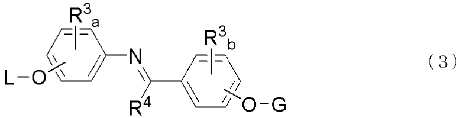 wherein R³ and R⁴ each independently represent a hydrogen atom or a monovalent hydrocarbon group having 1 to 10 carbon atoms; "L" is a divalent hydrocarbon group having 1 to 12 carbon atoms; "a" and "b" are an integer of 0 to 4; and G represents a glycidyl group.

## Description

### TECHNICAL FIELD

The present invention relates to an epoxy resin composition.

### BACKGROUND ART

An epoxy resin is used in various fields due to their excellent mechanical strength, electrical insulation, heat resistance, chemical resistance, water resistance, low shrinkage, and adhesiveness. In recent years, performance requirements for epoxy resins have increased, and development has been made for the problem of epoxy resins, i.e. low toughness (Patent Documents 1 to 4).

An epoxy-modified silicone is a polyorganosiloxane having an epoxy group that is a reactive group, and is used in applications such as a resin modifier, a fiber treatment agent, and a coating additive by utilizing its reactivity. In addition, an effect of imparting flexibility, which is a characteristic of silicone, is also expected, but in a case where an epoxy-modified silicone is added to an epoxy resin, there is a problem that compatibility with other polar compounds such as a curing agent is poor, and separation occurs.

Patent Document 5 describes an epoxy resin having a mesogenic group, and reports that the epoxy resin is excellent in workability, and has excellent mechanical properties, thermal properties, and chemical properties. However, when the epoxy resin having a mesogenic group is mixed with a general epoxy resin such as a bisphenol type epoxy resin, it has not been clear how each physical property changes.

### CITATION LIST

### PATENT LITERATURE

Patent Document 1: JP 2008-239890 A
Patent Document 2: JP 2014-505761 A
Patent Document 3: JP 2017-536440 A
Patent Document 4: WO 2018/008741 A1
Patent Document 5: JP 2008-214599 A

### SUMMARY OF INVENTION

### TECHNICAL PROBLEM

The effect of adding the epoxy resin having a mesogenic group has not been studied in detail.

The present invention was made in view of such circumstances, and has for its object to provide an epoxy resin composition including a mesogenic group-containing polyorganosiloxane.

### SOLUTION TO PROBLEM

For solving the above problems, the present invention provides an epoxy resin composition including:
(A) 100 parts by mass of an epoxy resin containing 2 or more epoxy groups in one molecule;
(B) 5 to 20 parts by mass of a mesogenic group-containing polyorganosiloxane represented by the following formula (1); and
(C) 1 to 20 parts by mass of an epoxy resin curing agent; 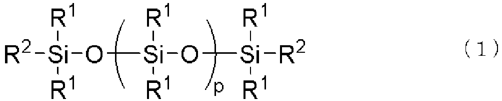 wherein R¹ each independently represents a group selected from an alkyl group having 1 to 12 carbon atoms, an aryl group having 6 to 12 carbon atoms, and an aralkyl group having 7 to 12 carbon atoms, or a hydroxy group; "p" represents a repeating unit of a siloxane structure and is an integer of 0 to 100; and R² each independently represents the following formula (2) or formula (3), 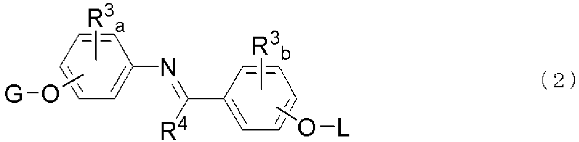 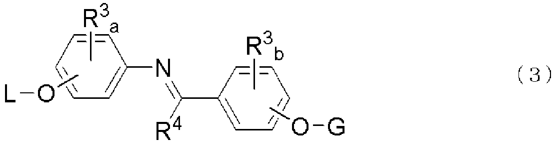 wherein R³ and R⁴ each independently represent a hydrogen atom or a monovalent hydrocarbon group having 1 to 10 carbon atoms; L represents a linking group to the formula (1) and is a divalent hydrocarbon group having 1 to 12 carbon atoms; "a" and "b" represent the number of substituents of a phenyl group in the formula (2) and the formula (3) and are an integer of 0 to 4; and G represents a glycidyl group.

Such an epoxy resin composition provides a cured product having excellent tensile shear strength and elongation at break.

In the present invention, the mesogenic group-containing polyorganosiloxane represented by the formula (1) preferably has a number average molecular weight of 500 to 100,000 in terms of a polystyrene standard substance.

Such a molecular weight is sufficient to obtain a cured product by reaction of epoxy groups at both ends with the curing agent.

Additionally, in the present invention, the mesogenic group-containing polyorganosiloxane represented by the formula (1) preferably has an epoxy equivalent (g/mol) of 300 to 5,000 g/mol.

Such an epoxy equivalent is sufficient to obtain a cured product having good physical properties by reaction of the epoxy groups at both ends with the epoxy resin curing agent (C).

Further, in the present invention, the mesogenic group-containing polyorganosiloxane represented by the formula (1) includes hexamethylcyclotrisiloxane (D3), octamethylcyclotetrasiloxane (D4), decamethylcyclopentasiloxane (D5), and dodecamethylcyclohexasiloxane (D6) in the total amount of 3,000 ppm or less.

By reducing the amount of these low-molecular-weight cyclic siloxanes, it is possible to avoid decrease in adhesiveness due to bleed-out of low-molecular-weight components on the surface of the cured product, contamination of the surrounding environment due to volatilization of the low-molecular-weight components, and the like.

In the present invention, the epoxy resin (A) is preferably a bisphenol type epoxy resin.

Such an epoxy resin composition can reinforce the properties of various selected bisphenol type epoxy resins that are used, and can increase both the elongation property and the tensile shear strength as compared with the case of using a bisphenol type epoxy resin alone.

Moreover, in the present invention, the epoxy resin curing agent (C) is preferably an amine curing agent.

With such an epoxy resin composition, good curing properties can be obtained.

Additionally, in the present invention, it is preferred that the epoxy resin composition further contains a filler (D).

Such an epoxy resin composition can reinforce the mechanical strength.

### ADVANTAGEOUS EFFECTS OF INVENTION

The present invention relates to an epoxy resin composition containing a polyorganosiloxane, and a cured product obtained by reacting and curing the composition. More particularly, the present invention relates to an epoxy resin composition having epoxy groups at both ends and including a mesogenic group-containing polyorganosiloxane in the main chain, and a cured product obtained by reacting and curing the composition.

The epoxy resin composition of the present invention is highly useful because the toughness is improved when a cured product is produced according to a predetermined structure and formulation, and good adhesive force is exhibited when the cured product is produced between substrates.

### DESCRIPTION OF EMBODIMENTS

As described above, the development of an epoxy resin composition including a mesogenic group-containing polyorganosiloxane has been required.

As a result of intensive studies on the above problems, the present inventors found that an epoxy resin composition having a predetermined structure and formulation is highly useful because the toughness is improved when a cured product is produced, and good adhesive force is exhibited when the cured product is produced between substrates. Thereby, the present inventors completed the present invention.

That is, the present invention is an epoxy resin composition including:
(A) 100 parts by mass of an epoxy resin containing 2 or more epoxy groups in one molecule;
(B) 5 to 20 parts by mass of a mesogenic group-containing polyorganosiloxane represented by the following formula (1); and
(C) 1 to 20 parts by mass of an epoxy resin curing agent; 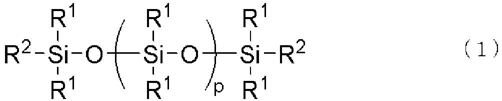 wherein R¹ each independently represents a group selected from an alkyl group having 1 to 12 carbon atoms, an aryl group having 6 to 12 carbon atoms, and an aralkyl group having 7 to 12 carbon atoms, or a hydroxy group; "p" represents a repeating unit of a siloxane structure and is an integer of 0 to 100; and R² each independently represents the following formula (2) or formula (3), 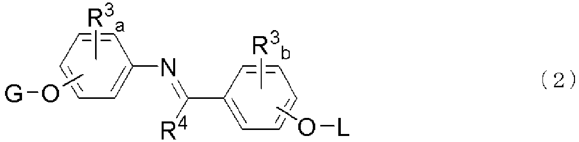 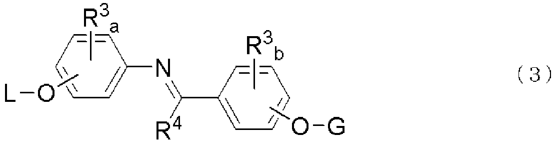 wherein R³ and R⁴ each independently represent a hydrogen atom or a monovalent hydrocarbon group having 1 to 10 carbon atoms; L represents a linking group to the formula (1) and is a divalent hydrocarbon group having 1 to 12 carbon atoms; "a" and "b" represent the number of substituents of a phenyl group in the formula (2) and the formula (3) and are an integer of 0 to 4; and G represents a glycidyl group.

### [Epoxy Resin Composition]

The epoxy resin composition of the present invention is an epoxy resin composition including the epoxy resin (A), the mesogenic group-containing polyorganosiloxane (B), and the epoxy resin curing agent (C), in which the component (B) is included by 5 to 20 parts by mass with respect to 100 parts by mass of the component (A).

Hereinafter, the present invention will be described in detail, but the present invention is not limited thereto.

### [(A) Epoxy Resin]

As the epoxy resin containing 2 or more epoxy groups in one molecule (A) of the present invention, a known epoxy resin can be used, and examples thereof include, but are not particularly limited to, bisphenol type epoxy resins such as a bisphenol A type epoxy resin, a bisphenol F type epoxy resin, and a bisphenol S type epoxy resin; alicyclic epoxy resins such as a dicyclopentadiene type epoxy resin and 3,4-epoxycyclohexenylmethyl-3',4'-epoxycyclohexene carboxylate; polyfunctional phenol type epoxy resins such as a resorcinol type epoxy resin; stilbene type epoxy resins, triazine skeleton-containing epoxy resins, fluorene skeleton-containing epoxy resins, triphenol alkane type epoxy resins, biphenyl type epoxy resins, xylylene type epoxy resins, biphenyl aralkyl type epoxy resins, naphthalene type epoxy resins, and diglycidyl ether compounds of polycyclic aromatic compounds such as anthracene. These may be used alone or in combination of two or more. Preferred are bisphenol type epoxy resins.

The epoxy equivalent of the epoxy resin (A) is not particularly limited, and is preferably 50 to 5,000 g/eq, more preferably 75 to 2,500 g/eq in terms of solid content from the viewpoint of the pot life after mixing, the strength of the cured product, and the like.

The nature of the epoxy resin (A) is not particularly limited, and is preferably liquid at 25°C. In the case of liquid, the viscosity is preferably 10 to 100,000 mPa·s, more preferably 20 to 50,000 mPa·s. Note that the viscosity is measured at 25°C by the method using a B-type viscometer as described in JIS K7117-1:1999.

As is clear from the above exemplification, the component (A) of the present invention does not have an organosiloxy group in the molecule, and differs in this respect from the component (B) described below.

### [(B) Mesogenic Group-Containing Polyorganosiloxane]

The component (B) of the present invention is a mesogenic group-containing polyorganosiloxane represented by the following formula (1).

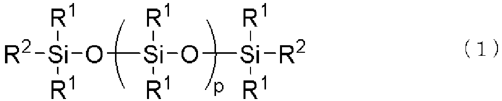

In the formula (1), R¹ each independently represents a group selected from an alkyl group having 1 to 12 carbon atoms, an aryl group having 6 to 12 carbon atoms, and an aralkyl group having 7 to 12 carbon atoms, or a hydroxy group; "p" represents a repeating unit of a siloxane structure and is an integer of 0 to 100; and R² each independently represents the following formula (2) or formula (3).

In the formula (1), R¹ each independently represents a group selected from an alkyl group having 1 to 12, preferably 1 to 8 carbon atoms, an aryl group having 6 to 12, preferably 6 to 9 carbon atoms, and an aralkyl group having 7 to 12, preferably 7 to 10 carbon atoms, or a hydroxy group. Specific examples thereof include linear or branched alkyl groups such as a methyl group, an ethyl group, an n-propyl group, an isopropyl group, an n-butyl group, an isobutyl group, an s-butyl group, a t-butyl group, an n-pentyl group, an n-hexyl group, an n-heptyl group, an n-octyl group, a 2-ethylhexyl group, an n-nonyl group, and an n-decyl group; cycloalkyl groups such as a cyclohexyl group; aryl groups such as a phenyl group and a naphthyl group; and aralkyl groups such as a benzyl group. Among these, a methyl group or a phenyl group is preferred.

"p" represents a repeating unit of a siloxane structure, and is an integer of 0 to 100, preferably 0 to 40, more preferably 0 to 10, and particularly preferably "p" = 1.

In the formula (1), R² each independently represents the following formula (2) or (3).

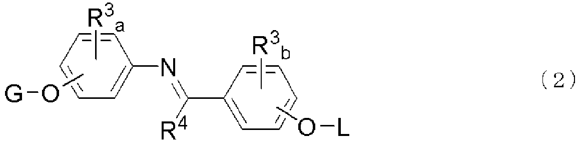

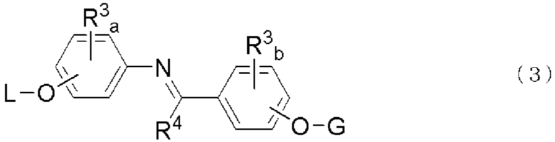

In the formulae (2) and (3), R³ and R⁴ each independently represent a hydrogen atom or a monovalent hydrocarbon group having 1 to 10 carbon atoms; L represents a linking group to the formula (1) and is a divalent hydrocarbon group having 1 to 12 carbon atoms; "a" and "b" represent the number of substituents of a phenyl group in the formula (2) and the formula (3) and are an integer of 0 to 4; and G represents a glycidyl group.

In the formulae (2) and (3), R³ and R⁴ each independently represent a hydrogen atom or a monovalent hydrocarbon group having 1 to 10 carbon atoms.

The monovalent hydrocarbon group having 1 to 10 carbon atoms is a group selected from an alkyl group having 1 to 10 carbon atoms, an aryl group having 6 to 10 carbon atoms, and an aralkyl group having 7 to 10 carbon atoms, and specific examples thereof include those described above.

"a" and "b" represent the number of substituents of a phenyl group in the formulae (2) and (3), and are an integer of 0 to 4.

G in the formulae (2) and (3) is a glycidyl group (2, 3-epoxypropyl group).

L in the formulae (2) and (3) is a linking group to the formula (1) and represents a divalent hydrocarbon group having 1 to 12 carbon atoms.

Examples of the divalent hydrocarbon group include an alkylene group having 1 to 12 carbon atoms, an arylene group having 6 to 12 carbon atoms, and an aralkylene group having 7 to 12 carbon atoms.

The alkylene group having 1 to 12 carbon atoms may be either linear, branched, or cyclic, and specific examples thereof include linear or branched alkylene groups such as an n-pentylene group, an n-hexylene group, an n-heptylene group, an n-octylene group, a 2-ethylhexylene group, an n-decylene group, an n-undecylene group, and an n-dodecylene group.

The alkylene group may have one or more ether bonds in the middle of the molecular chain. Specific examples thereof include groups containing an ether bond such as an ethyleneoxy group, a propyleneoxy group, and a butyleneoxy group, and a plurality of ether bonds may be contained.

Examples of the arylene group having 6 to 12 carbon atoms include an o-phenylene group, a m-phenylene group, a p-phenylene group, a 3,5-tolylene group, a 2,4-tolylene group, a 2,6-tolylene group, a 1,2-naphthylene group, a 1,8-naphthylene group, a 2,3-naphthylene group, and a 4,4'-biphenylene group.

Examples of the aralkylene group having 7 to 12 carbon atoms include an o-xylylene group, a m-xylylene group, and a p-xylylene group.

R² in the formula (1) is more preferably the following formula (4).

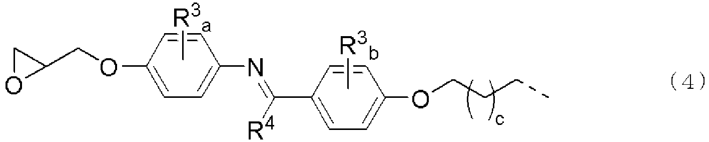

In the formula (4), "c" represents the number of carbon atoms of a linking group to a siloxane skeleton, and is an integer of 0 to 6; the dotted line represents a linking site to the formula (1); and R³, R⁴, "a", and "b" are the same as described above.

"c" represents the number of carbon atoms of a linking group to a siloxane skeleton in the formula (4), and is an integer of 0 to 6, preferably "c" = 1.

The dotted line represents a linking site to the formula (1).

The mesogenic group-containing polyorganosiloxane (B) of the present invention preferably has the number average molecular weight of 500 to 100,000, more preferably 500 to 50,000, and further preferably 500 to 20,000. Within this range, the molecular weight is sufficient to obtain a cured product by reaction of epoxy groups at both ends with the curing agent. Note that the number average molecular weight refers to a number average molecular weight in terms of a polystyrene standard substance in gel permeation chromatography (GPC) measurement under the following measurement conditions.

### [Measurement Conditions]

Developing solvent: Tetrahydrofuran (THF)
Flow rate: 0.6 mL/min
Detector: Differential refractive index detector (RI)
Column: TSK Guardcolumn Super H-H
TSKgel Super HM-N (6.0 mm I.D. × 15 cm × 1)
TSKgel Super H2500 (6.0 mm I.D. × 15 cm × 1)
(All are manufactured by TOSOH CORPORATION)
Column temperature: 40°C
Sample injection amount: 50 µL (THF solution with concentration of 0.3% by mass)

The mesogenic group-containing polyorganosiloxane (B) of the present invention preferably has an epoxy equivalent (g/mol) of 300 to 5,000 g/mol, and more preferably 400 to 2,500 g/mol. Within this range, the epoxy equivalent is sufficient to obtain a cured product having good physical properties by reaction of epoxy groups at both ends with the epoxy resin curing agent (C) described later. The epoxy equivalent (g/mol) can be calculated by adding hydrochloric acid to a predetermined mass of sample dissolved in 1,4-dioxane, followed by back titration with an aqueous sodium hydroxide solution.

As described in WO 2016/111104 A1 and the like, low molecular weight cyclic siloxanes may cause various problems, and it is preferable to reduce the amount thereof. As the component (B), preferably, one containing hexamethylcyclotrisiloxane (D3), octamethylcyclotetrasiloxane (D4), decamethylcyclopentasiloxane (D5), and dodecamethylcyclohexasiloxane (D6) in the total amount of more than 0 ppm and 3,000 ppm or less, more preferably 0.1 to 2,000 ppm, and further preferably 0.1 to 1,000 ppm can be used.

The amount of the low-molecular-weight cyclic siloxanes (D3 to D6) are values determined by gas chromatography (GC) using a sample obtained by extracting and diluting the component (B) with an organic solvent. In addition, "more than 0 ppm" is applied when even a slight peak is detected at the time of quantification by the above method.

### [(C) Epoxy Resin Curing Agent]

As the epoxy resin curing agent (C) of the present invention, a known curing agent capable of reacting with and curing an epoxy resin can be used. The curing agent is added in order to react reactive functional groups (an amino group, a phenolic hydroxy group, an acid anhydride group, a mercapto group, or the like) in a molecule of the curing agent with epoxy groups in the component (A) and the component (B) to form a cured product having a three-dimensional crosslinked structure.

Examples of the component (C) include an amine curing agent, a phenol curing agent, an acid anhydride curing agent, and a thiol curing agent.

Among these, an amine curing agent is preferable, and examples of the amine curing agent include an aromatic polyamine, an aliphatic polyamine, a polyamide amine, and a polyether polyamine. More preferred is an aromatic polyamine.

Examples of the aromatic polyamine include compounds represented by the following formulae (I) to (IV) .

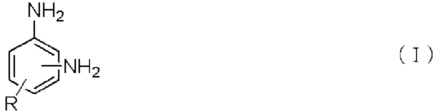

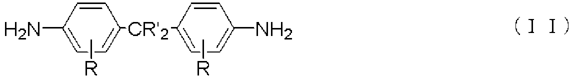

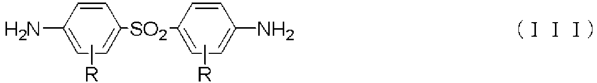

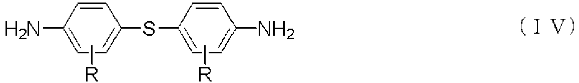

In the formulae (I) to (IV), R each independently represents a hydrogen atom or a monovalent alkyl group having 1 to 6 carbon atoms; R' each independently represents a hydrogen atom, a monovalent alkyl group having 1 to 12 carbon atoms, a phenyl group, or an aminophenyl group; and two R's may be bonded together to form a ring structure.

Specific examples of the aromatic polyamine include aromatic diaminodiphenylmethane compounds such as 4,4'-diaminodiphenylmethane, 3,3'-diethyl-4,4'-diaminodiphenylmethane, 3,3',5,5'-tetramethyl-4,4'-diaminodiphenylmethane, and 3,3',5,5'-tetraethyl-4,4'-diaminodiphenylmethane; 2,4-diaminotoluene; 1,4-diaminobenzene; and 1,3-diaminobenzene. These may be used alone or in combination of two or more.

In the present invention, when the component (A) is taken as 100 parts by mass, the component (B) is 5 to 20 parts by mass, preferably 10 to 20 parts by mass, and the component (C) is 1 to 20 parts by mass, preferably 1 to 10 parts by mass. When the component (B) or the component (C) are more than 20 parts by mass, the strength of the cured product of the epoxy resin decreases, and sufficient adhesive force cannot be obtained. In addition, Tg is lowered, so that heat resistance also decreases. When the component (B) is less than 5 parts by mass, the desired effect of adding the component (B) is reduced. When the part by mass of the component (C) is less than 1 part by mass, the desired effect of adding the component (C) is reduced.

### [Other Components]

The epoxy resin composition of the present invention may further contain a filler (D). Examples of the filler include silicas such as fused silica, crystalline silica, and cristobalite; and metal oxides such as aluminum oxide, titanium oxide, and magnesium oxide. These may be used alone or in combination of two or more. Among these, silicas are preferable from the viewpoint of availability and quality stability. The average particle diameter is preferably 0.1 to 50 µm, and can be selected according to the application. The average particle diameter may be, for example, a volume average particle diameter measured by a laser diffraction method.

The filler is preferably surface-treated in advance with a coupling agent such as a silane coupling agent. The blending amount of the coupling agent used for the surface treatment and the surface treatment method are not particularly limited.

If necessary, other additives may be added to the epoxy resin composition of the present invention in accordance with the purpose of the present invention. Examples of the additives include reactive diluents, curing accelerators, flame retardants, ion trapping agents, antioxidants, adhesion aids, colorants, and coupling agents.

In the method for producing the epoxy resin composition of the present invention, the composition can be obtained by, for example, while heating the component (A), the component (B), and the component (C), mixing, stirring, dissolving, and dispersing the components at the same time. The composition can also be obtained by, while separately heating the component (A), the component (B), or the component (C), mixing, stirring, dissolving, and dispersing the components. Preferably, the component (B) and the component (C) are mixed, stirred, dissolved, and dispersed while heating the components, and then the component (A) is added thereto, whereby a composition in which the component (B) is well dispersed can be obtained.

If necessary, the component (D) and/or other additives may be added. In addition to the component (A), the component (B), and the component (C), the component (D) and/or other additives may be mixed, stirred, dissolved, and dispersed while they are simultaneously or separately heated. Alternatively, the component (B) and the component (C) may be mixed, stirred, dissolved, and dispersed while heating the components, and then the component (D) and/or other additives may be added simultaneously with the component (A) .

Curing conditions of the epoxy resin composition in the present invention are not particularly limited, and the epoxy resin composition may be heated, for example, at a temperature of 60 to 200°C, preferably 80 to 180°C for 30 minutes to 10 hours, preferably 1 to 5 hours. In addition, in order to efficiently perform the reaction, the epoxy resin composition may be heated, for example, in one to five stages from a low temperature to a high temperature for the above-described time.

### EXAMPLE

Hereinafter, the present invention will be specifically described with reference to Examples, Comparative Examples, and Synthesis Examples. However, the present invention is not limited thereto.

Bisphenol A type epoxy resin: jER828EL manufactured by Mitsubishi Chemical Corporation (Epoxy equivalent: 186 g/mol, viscosity: 13,000 mPa·s) (Hereinafter, referred to as DGEBA.)
Amine curing agent: 4,4'-diaminodiphenylmethane manufactured by Tokyo Chemical Industry Co., Ltd. (N-H equivalent: 49.6 g/mol) (Hereinafter, referred to as DDM.)

### [Synthesis Example 1] Method for synthesizing SM epoxy resin

To a glass reactor, 360 mL of ethanol, 17.9 g (0.164 mol) of p-aminophenol, 20 g (0.164 mol) of 4-allyloxybenzaldehyde, and a small amount of zinc chloride were added, and the mixture was reacted in an oil bath at 60°C for 4 hours. Then, the resultant was allowed to stand in a refrigerator for 2 hours and the precipitated crystals were separated by filtration to obtain 27 g of 4-((4-allyloxy)benzylideneamino)phenol.

Next, 7 g (0.033 mol) of 4-((4-allyloxy)benzylideneamino)phenol thus obtained, 5 mL of dimethyl sulfoxide, 37 g (0.394 mol) of epichlorohydrin, and a small amount of tetra-n-butylammonium chloride were added to a 500 ml separable flask. After the mixture was reacted at 60°C for 2 hours, 3.16 g (0.04 mol) of 50% aqueous sodium hydroxide solution was added dropwise thereto over 1 hour, and further the mixture was reacted for 3 hours. The obtained solution was cooled, and the precipitated crystals were separated by filtration, sufficiently washed with distilled water, and then dried to obtain 3.9 g of 4-((4-allyloxy)benzylideneamino)phenol glycidyl ether.

Two grams (6.5 mmol) of 4-((4-allyloxy)benzylideneamino)phenol glycidyl ether was placed in a separable flask, and dissolved in 40 mL of 1,4-dioxane. Further, 0.667 g (3.24 mmol) of 1,1,3,3,5,5-hexamethyltrisiloxane and 0.02 g (0.06 mmol) of 1,3-divinyl-1,1,3,3-tetramethyldisiloxane platinum complex were added, the temperature of the oil bath was raised to 90°C, and the mixture was heated and stirred for 6 hours.

The reaction solution was cooled, and the precipitated crystals were separated by filtration and sufficiently washed with methanol to obtain white crystals. The amount of low-molecular-weight cyclic siloxanes (D3 to D6) in the obtained SM epoxy resin was measured, and all values were below the detection limit.

### [Examples 1 to 3]

Defoamed DGEBA and the SM epoxy resin of Synthesis Example 1 were placed in an aluminum cup and heated on a hot plate at 130°C for the purpose of decreasing the viscosity. Subsequently, a chemical equivalent of DDM was placed in another aluminum cup and stirred on a hot plate at the same temperature until it was completely melted. Thereafter, the melted DDM was added to the aluminum cup containing DGEBA and the SM epoxy resin of Synthesis Example 1, followed by stirring for 5 minutes to produce a composition.

Thereafter, the aluminum cup containing the composition was heated and cured in three stages at 120°C for 2 hours, 150°C for 2 hours, and 180°C for 2 hours. The temperature raising rate was 5°C/min. Table 1 shows the blending amount and physical properties of the cured products.

### [Example 4]

The SM epoxy resin of Synthesis Example 1 and a chemical equivalent of DDM relative to the total epoxy melted were added to an aluminum cup and stirred on a hot plate at 140°C for 15 minutes. Subsequently, defoamed DGEBA was placed in another aluminum cup, and heated on a hot plate at the same temperature for the purpose of decreasing the viscosity. Thereafter, the DGEBA with a reduced viscosity was added to the aluminum cup containing the SM epoxy resin of Synthesis Example 1 and DDM, followed by heating and stirring for 2 minutes to produce a composition.

Thereafter, the aluminum cup containing the composition was heated and cured in a thermostatic bath in three stages of 120°C for 2 hours, 150°C for 2 hours, and 180°C for 2 hours. The temperature raising rate was 5°C/min. Table 1 shows the blending amount and physical properties of the cured product.

### [Comparative Example 1]

Defoamed DGEBA was placed in an aluminum cup and heated on a hot plate at 130°C for the purpose of decreasing the viscosity. Subsequently, a chemical equivalent of DDM was placed in another aluminum cup and stirred on a hot plate at the same temperature until it was completely melted. Thereafter, the melted DDM was added to the aluminum cup containing DGEBA, followed by stirring for 5 minutes to produce a composition.

Thereafter, the aluminum cup containing the composition was heated and cured in a thermostatic bath in three stages of 120°C for 2 hours, 150°C for 2 hours, and 180°C for 2 hours. The temperature raising rate was 5°C/min. Table 1 shows the blending amount and physical properties of the cured product.

### [Dynamic Viscoelasticity Measurement]

The cured products of Examples 1 to 4 and Comparative Example 1 were cut into a test piece size of 30 mm in length × 4.0 mm in width × 0.40 mm in thickness, and measured with Rheogel-E40000 manufactured by UBM under the conditions of a temperature range of - 150 to 250°C, a sinusoidal wave, a temperature raising rate of 2.5°C/min, a tensile mode, and a frequency of 10 Hz. Based on the obtained results, the peak top of the loss tangent tanδ, which is the loss elastic modulus (G")/storage elastic modulus (G'), was defined as Tg.

### [Tensile Test]

The cured products of Examples 1 to 4 and Comparative Example 1 were cut into a test piece size of 30 mm in length × 2.0 mm in width × 2.0 mm in thickness. The strength at break and elongation at break of the test pieces were measured with AGS-J manufactured by Shimadzu Corporation under the condition of a head speed of 2 mm/min. The strength at break and the elongation at break were average values of N = 5.

**[Table 1]**

| | Example 1 | Example 2 | Example 3 | Example 4 | Comparative Example 1 |
|---|---|---|---|---|---|
| DGE BA (g) | 1.50 | 1.50 | 1.50 | 1.50 | 1.50 |
| Synthesis Example 1 (g) | 0.08 | 0.15 | 0.30 | 0.15 | - |
| DDM (g) | 0.41 | 0.42 | 0.44 | 0.42 | 0.40 |
| Appearance of composition | Colorless transparent | Colorless transparent | Colorless transparent | Colorless transparent | Colorless transparent |
| Appearance after curing | Brown transparent | Brown transparent | Brown transparent | Brown transparent | Yellow transparent |
| Tg (°C) | 178 | 172 | 166 | 152 | 184 |
| Strength at break (MPa) | 67.2 | 70.0 | 66.0 | 71.7 | 66.7 |
| Elongation at break (%) | 11.0 | 11.1 | 11.5 | 12.3 | 8.7 |

### [Examples 5 to 8 and Comparative Example 2]

### [Tensile Shear Adhesion Test]

A soft steel plate was immersed in acetone and cleaned by ultrasonic wave for 30 minutes. Next, the soft steel plate was polished with an electric sander equipped with #240 abrasive paper to remove an oxide film on the surface, immersed in acetone, and subjected to ultrasonic cleaning for 30 minutes twice. Thereafter, a cover plate (25 mm in length × 25 mm in width × 1.6 mm in thickness) was attached to a part 62.5 mm from the edge of the soft steel plate. Then, the compositions prepared in Examples were coated on the soft steel plate from its edge to 12.5 mm. Another soft steel plate was superimposed thereon, and the plates were heated at 5 MPa and 120°C for 2 hours using a hot press. Thereafter, a weight (weight: 1700 g, pressure: 960 Pa) was placed on the test pieces in a thermostatic bath, followed by heating at 150°C for 2 hours. Then, the temperature was raised to 180°C at a temperature raising rate of 5°C/min, followed by heating and curing at 180°C for 2 hours to produce test pieces. After gradually cooling, the test pieces were taken out, and resin protruding from the bonded part was removed with a cutter knife.

The obtained test pieces were subjected to a tensile shear adhesion test using AGS-X manufactured by Shimadzu Corporation by the method described in JIS K6850:1999 under the condition of a head speed of 50 mm/min. The tensile shear strength and the elongation at break were average values of N = 5. The fracture morphology was visually observed. Table 2 shows the compositions used for the evaluation and results of the tensile shear adhesion test.

**[Table 2]**

| | Example 5 | Example 6 | Example 7 | Example 8 | Comparative Example 2 |
|---|---|---|---|---|---|
| Composition | Example 1 | Example 2 | Example 3 | Example 4 | Comparative Example 1 |
| Tensile shear adhesion | | | | | |
| Tensile shear strength (MPa) | 12.4 | 12.5 | 11.8 | 19.4 | 11.4 |
| Elongation at break (%) | 8.7 | 8.7 | 10.8 | 17.6 | 7.1 |
| Fracture morphology | Interfacial peeling | Interfacial peeling | Interfacial peeling | Cohesive failure Partly interfacial peeling | Interfacial peeling |

In Examples 5 to 8, as compared with Comparative Example 2, the cured products composed of the epoxy resin composition of the present invention showed increase in the tensile shear strength and elongation at break by the tensile shear adhesion test. Thus, the usefulness of the epoxy resin composition of the present invention was shown.

The present description includes the following embodiments.
[1]: An epoxy resin composition comprising:
   (A) 100 parts by mass of an epoxy resin containing 2 or more epoxy groups in one molecule;
   (B) 5 to 20 parts by mass of a mesogenic group-containing polyorganosiloxane represented by the following formula (1); and
   (C) 1 to 20 parts by mass of an epoxy resin curing agent; 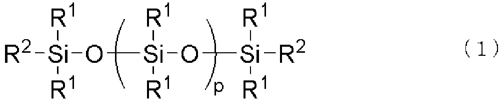 wherein R¹ each independently represents a group selected from an alkyl group having 1 to 12 carbon atoms, an aryl group having 6 to 12 carbon atoms, and an aralkyl group having 7 to 12 carbon atoms, or a hydroxy group; "p" represents a repeating unit of a siloxane structure and is an integer of 0 to 100; and R² each independently represents the following formula (2) or formula (3), 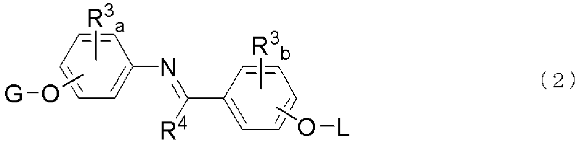 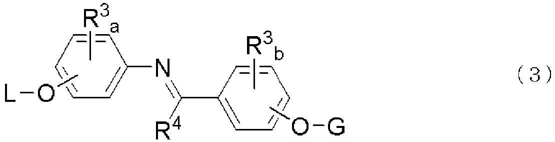 wherein R³ and R⁴ each independently represent a hydrogen atom or a monovalent hydrocarbon group having 1 to 10 carbon atoms; L represents a linking group to the formula (1) and is a divalent hydrocarbon group having 1 to 12 carbon atoms; "a" and "b" represent a number of substituents of a phenyl group in the formula (2) and the formula (3) and are an integer of 0 to 4; and G represents a glycidyl group.
[2]: The epoxy resin composition of the above [1], wherein the mesogenic group-containing polyorganosiloxane represented by the formula (1) has a number average molecular weight of 500 to 100,000 in terms of a polystyrene standard substance.
[3]: The epoxy resin composition of the above [1] or [2], wherein the mesogenic group-containing polyorganosiloxane represented by the formula (1) has an epoxy equivalent (g/mol) of 300 to 5,000 g/mol.
[4]: The epoxy resin composition of the above [1], [2], or [3], wherein the mesogenic group-containing polyorganosiloxane represented by the formula (1) comprises hexamethylcyclotrisiloxane (D3), octamethylcyclotetrasiloxane (D4), decamethylcyclopentasiloxane (D5), and dodecamethylcyclohexasiloxane (D6) in a total amount of 3,000 ppm or less.
[5]: The epoxy resin composition of the above [1], [2], [3], or [4], wherein the epoxy resin (A) is a bisphenol type epoxy resin.
[6]: The epoxy resin composition of the above [1], [2], [3], [4], or [5], wherein the epoxy resin curing agent (C) is an amine curing agent.
[7]: The epoxy resin composition of the above [1], [2], [3], [4], [5], or [6], further comprising a filler (D) .

Note that the present invention is not limited to the above-described embodiments. The embodiments are just examples, and any examples that substantially have the same feature and demonstrate the same functions and effects as those in the technical concept disclosed in the claims of the present invention are included in the technical scope of the present invention.

## Claims

1. An epoxy resin composition comprising:
(A) 100 parts by mass of an epoxy resin containing 2 or more epoxy groups in one molecule;
(B) 5 to 20 parts by mass of a mesogenic group-containing polyorganosiloxane represented by the following formula (1); and
(C) 1 to 20 parts by mass of an epoxy resin curing agent; 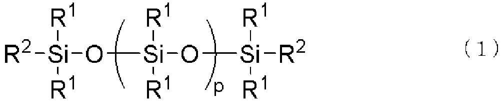 wherein R¹ each independently represents a group selected from an alkyl group having 1 to 12 carbon atoms, an aryl group having 6 to 12 carbon atoms, and an aralkyl group having 7 to 12 carbon atoms, or a hydroxy group; "p" represents a repeating unit of a siloxane structure and is an integer of 0 to 100; and R² each independently represents the following formula (2) or formula (3), 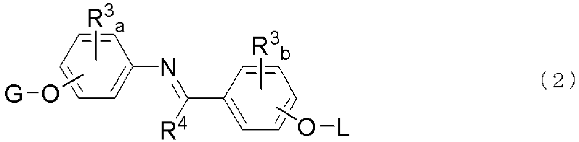 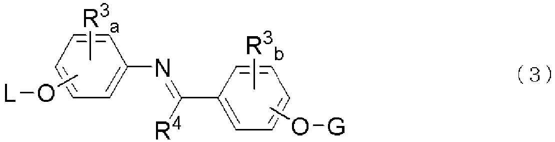 wherein R³ and R⁴ each independently represent a hydrogen atom or a monovalent hydrocarbon group having 1 to 10 carbon atoms; L represents a linking group to the formula (1) and is a divalent hydrocarbon group having 1 to 12 carbon atoms; "a" and "b" represent a number of substituents of a phenyl group in the formula (2) and the formula (3) and are an integer of 0 to 4; and G represents a glycidyl group.

2. The epoxy resin composition according to claim 1, wherein the mesogenic group-containing polyorganosiloxane represented by the formula (1) has a number average molecular weight of 500 to 100,000 in terms of a polystyrene standard substance.

3. The epoxy resin composition according to claim 1, wherein the mesogenic group-containing polyorganosiloxane represented by the formula (1) has an epoxy equivalent (g/mol) of 300 to 5,000 g/mol.

4. The epoxy resin composition according to claim 1, wherein the mesogenic group-containing polyorganosiloxane represented by the formula (1) comprises hexamethylcyclotrisiloxane (D3), octamethylcyclotetrasiloxane (D4), decamethylcyclopentasiloxane (D5), and dodecamethylcyclohexasiloxane (D6) in a total amount of 3,000 ppm or less.

5. The epoxy resin composition according to claim 1, wherein the epoxy resin (A) is a bisphenol type epoxy resin.

6. The epoxy resin composition according to claim 1, wherein the epoxy resin curing agent (C) is an amine curing agent.

7. The epoxy resin composition according to any one of claims 1 to 6, further comprising a filler (D).
